# EUROPÄISCHE PATENTSCHRIFT

(11) **EP 1 369 976 B1**
(45) Veröffentlichungstag und Bekanntmachung des Hinweises auf die Patenterteilung: **14.06.2006**
(21) Anmeldenummer: 03012304.6
(22) Anmeldetag: 28.05.2003
(51) Int. Cl.: H02K 5/02, H02K 1/27

(54) **Elektrische Maschine**
Electrical machine
Machine électrique

(30) Priorität: 04.06.2002 DE 10224776
(43) Veröffentlichungstag der Anmeldung: 10.12.2003
(73) Patentinhaber: Magnet-Motor Gesellschaft für magnetmotorische Technik mbH, D-82319 Starnberg (DE)
(72) Erfinder: Ehrhart, Peter, Dr., 81375 München (DE); Müller, Anton, Dr., 82327 Tutzing (DE)
(74) Vertreter: Klunker . Schmitt-Nilson . Hirsch

(56) Entgegenhaltungen:
- EP-A- 0 854 558
- DE-A- 3 622 231
- DE-A- 4 442 869
- DE-A- 19 736 710
- US-A- 4 781 986
- US-A- 5 122 704

## Beschreibung

Die vorliegende Erfindung betrifft eine elektrische Maschine aufweisend einen Rotor und einen dazu koaxial angeordneten Stator, wobei mindestens des Rotor aus mehreren Teilen gebildet ist und eine Bandage vorgesehen ist, die mehrere Teile des Rotors zusammenhält.

Generell befasst sich die vorliegende Erfindung mit der Vereinfachung der Konstruktion und der Herstellung von elektrischen Maschinen, insbesondere von Elektromotoren und Generatoren mit aus Einzelteilen gebildeten Innen- oder Außenrotoren bzw. aus Einzelteilen gebildeten Statoren. Bei konventioneller Herstellung werden diese Einzelteile mit mechanisch formschlüssigen Verbindungen miteinander verbunden, beispielsweise durch Schrauben oder Hintergreifungen, etc. Diese Art der Verbindung ist aufwändig in der Bearbeitung und in der Montage. Dazu kommt, dass sich manche Materialien, insbesondere Materialien, die für die Dauermagnete verwendet werden, relativ schwierig bearbeiten lassen.

Eine die Einzelteile umfangsmäßig umschließende Bandage ist eine geeignete Alternative für derartige mechanische formschlüssige Verbindungen. Die Bandage umschließt die Einzelteile und hält diese zusammen. Die Bandage ist grundsätzlich in der Lage, relativ hohe Kräfte, insbesondere die bei einem Rotor auftretenden Zentrifugalkräfte auszuhalten. Gegebenenfalls kann die Bandage auch in Kombination mit mechanischen formschlüssigen Verbindungen zum Festhalten der Einzelteile vorgesehen sein.

US-A-5 122 704 zeigt eine elektrische Maschine aufweisend einen Rotor und einen koaxial dazu angeordneten Stator. Der Rotor ist ein Windungen tragendes Blechpaket. Es ist eine Bandage vorgesehen, die dazu dient, eine Leckage von Kühlmittel in den Luftspalt zu vermeiden. Um sicher zu stellen, dass die Enden der Bandage in Axialrichtung dicht mit dem Rotor verbunden bleiben und sich nicht durch die unterschiedliche Wärmeausdehnung von Rotor und Bandage lockern, sind die Materialien der Bandage und des Rotors derart gewählt, dass die Wärmeausdehnungskoeffizienten in Axialrichtung ähnlich sind. Als ein beispielhaftes Fasermaterial für die Bandage ist Kohlefaser beschrieben, die einen negativen Wärmeausdehnungskoeffizienten hat, so dass sich bei Erwärmung der Rotor ausdehnt, während sich die Bandage in Umfangsrichtung kontrahiert. Diese zusätzlichen Kräfte müssen von der Bandage mit aufgenommen werden.

EP 0 854 558 A2 zeigt eine einfache und kostengünstige elektrische Maschine, aufweisend einen Rotor und einen koaxial dazu angeordneten Stator. Der Rotor weist Dauermagnete auf. Zum Zwecke der Kostenersparnis wird bei diese Maschine auf die aufwändige Bearbeitung der Permanentmagnete verzichtet. Vielmehr werden bei der Herstellung die Permanentmagnete in eine vorgefertigte Bandage aus keramischen Fasermaterial oder Kohlefasermaterial eingesetzt und die Leerräume zwischen Permanentmagnet und der Bandage mit Harzmaterial vergossen. Dabei wird der Nachteil eines größeren Luftspalts, verursacht durch das zusätzliche Harzmaterial zwischen Permanentmagneten und der Bandage und die Oberflächenungenauigkeiten der Permanentmagnete in Kauf genommen, um die Herstellung zu vereinfachen. Eine Abstimmung der Wärmeausdehnungskoeffizienten erfolgt nicht.

EP 0 331 180 A1 beschreibt eine elektrische Maschine, aufweisend einen Rotor und einen dazu koaxial angeordneten Stator, wobei der Rotor Dauermagnete und einen magnetischen Rückschluß aufweist und eine Bandage vorgesehen ist, die die Dauermagnete und den magnetischen Rückschluß bei Betrieb gegen die Zentrifugalkräfte zusammenhält, wobei die Bandage ein in einer Kunststoffmatrix angeordnetes Fasermaterial aufweist, das elektrisch nicht leitend ist.

DE 197 36 710 A1 zeigt eine elektrische Maschine, aufweisend einen Rotor und einen dazu koaxial angeordneten Stator, wobei der Rotor Dauermagnete und einen magnetischen Rückschluß aufweist und eine Spannhülse in der Art einer Bandage vorgesehen ist, die die Dauermagnete und den magnetischen Rückschluß bei Betrieb gegen die Zentrifugalkräfte zusammenhält. Die Spannhülse ist mit Vorspannung um den Rotor herum angeordnet und sorgt für die strukturelle Integrität des Rotors. Die Spannhülse kann ein in einer Aluminiummatrix angeordnetes Keramikfasermaterial aufweisen.

Die am Außenumfang des Stators oder Rotors vorgesehene Bandage erhöht jedoch dessen Durchmesser nicht unwesentlich. Insbesondere bei Innenrotoren, bei denen die Bandage im Luftspalt zwischen Rotor und Stator angeordnet ist, hat die Dicke der Bandage einen entscheidenden Einfluss auf die Ausnutzung und den Wirkungsgrad der elektrischen Maschine. Es ist das Bestreben des Konstrukteurs, diesen Luftspalt möglichst gering zu halten. Kann der Luftspalt auch nur um einen Zehntel Millimeter verringert werden, so hat das merkliche Auswirkung auf die Leistung und den Wirkungsgrad der Maschine. Aus diesem Grund wurde wegen der bekannten hohen Festigkeit von Kohlefasermaterialien für die Herstellung der Bandagen Kohlefasermaterial verwendet. Bei elektrischen Maschinen üblicher Größe beträgt die Stärke dieser Bandage typischerweise zwischen 0,5 und 5 mm, was für manche Anwendungen schon unzulässig viel ist. Es sei in diesem Zusammenhang insbesondere auch darauf hingewiesen, dass dieses Problem nicht nur bei solchen elektrische Maschinen auftritt, bei denen die Bandage im Luftspalt zwischen Rotor und Stator angeordnet ist, sondern auch bei solchen elektrischen Maschinen auftritt, bei denen die Bandage am Außenumfang, beispielsweise außen um den Außenrotor angeordnet ist. Hier führt die Stärke der Bandage zu einem größeren Gesamtdurchmesser der elektrischen Maschine, der auch für manche Anwendungen unerwünscht ist.

Es ist deshalb die Aufgabe der vorliegenden Erfindung, bei den bekannten elektrischen Maschinen der oben angegebenen Art die Dicke der Bandage zu reduzieren.

Erfindungsgemäß wird das mit den Merkmalen des Anspruchs 1 erreicht.

Es hat sich nämlich herausgestellt, dass der geringe Wärmeausdehnungskoeffizient des Kohlefasermaterials nachteilig für die Bandagenstärke ist, d.h. insbesondere bei thermisch hoch belasteten Maschinen führt der geringe Wärmeausdehnungskoeffizient des Kohlefasermaterials zu einer übermäßigen Bandagendicke, da zusätzlich zu den normalen von der Bandage aufzunehmenden Kräften die Kräfte der thermischen Fehlanpassung zwischen Bandagenmaterial und Material der Einzelteile des Rotors bzw. des Stators aufzunehmen sind. Es hat sich gezeigt, dass Fasermaterialien, die grundsätzlich eine geringere Festigkeit als Kohlefaser besitzen, dennoch zu effektiv dünneren Bandagen führen können, sofern sie mit ihrem thermischen Ausdehnungskoeffizienten im Bereich des thermischen Ausdehnungskoeffizienten des Stators bzw. Rotors liegen. Typischerweise liegt der thermische Ausdehnungskoeffizient der Einzelteile eines Rotors bzw. eines Stators mit etwa 6 - 9 x 10⁻⁶ in einem relativ hohen Bereich. Im Sinne der vorliegenden Offenbarung wird unter einem ähnlichen Wärmeausdehnungskoeffizienten ein Wärmeausdehnungskoeffizient verstanden, der etwa in der gleichen Größenordnung liegt, d.h. etwa um maximal den Faktor 10, vorzugsweise den Faktor 5, noch bevorzugter den Faktor 2 und besonders bevorzugt den Faktor 1 größer oder kleiner ist als der Wärmeausdehnungskoeffizient des Rotors bzw. Stators.

Das Vorsehen des elektrisch nicht leitenden Fasermaterials hat einerseits seine Vorteile in der Verringerung der Wirbelstromverluste und andererseits den Zweck, ein übermäßiges Aufwärmen, und damit thermische Ausdehnung der Bandagen, in Folge der Wirbelströme zu vermeiden. Im Extremfall könnten bei einem leitfähigen Material die Wirbelströme eine unterschiedliche Wärmeausdehnung der Bandage gegenüber dem Rotor zur Folge haben, was dem Rotor die erforderliche strukturelle Festigkeit nehmen könnte.

Das Material zeichnet sich durch einen hohen Elastizitätsmodul aus, durch den bei geringem Materialaufwand (d.h. dünne Bandage) hohe Haltekräfte erzielt werden können. Der Elastizitätsmodul ist höher als 300 GPa (30 x 10³ N/mm²), vorzugsweise höher als 400 GPa.

Die Bandage ist aus einem keramischen Fasermaterial gebildet. Bei keramischen Fasermaterialien ist der hohe Elastizitätsmodul in günstiger Weise mit einem geeigneten Wärmeausdehnungskoeffizient vereint. Das keramische Fasermaterial hat jedoch einen weiteren wichtigen Vorteil, der in seinem Elastizitätsmodul begründet ist. Die keramische Faserbandage dehnt sich unter Krafteinwirkung nur relativ wenig, was für den Fall des Rotors bedeutet, dass sich die vorgespannte Bandage unter Fliehkrafteinwirkung nur minimal weitet bzw. die Vorspannung so hoch gewählt werden kann, dass unter Fliehkrafteinwirkung keine oder nur eine minimale Dehnung der Bandage auftritt. Damit ist sichergestellt, dass die Bandage die strukturelle Integrität des Rotors bzw. des Stators unabhängig von den darauf wirkenden Kräften beibehält und die Einzelteile des Rotors bzw. des Stators relativ zueinander fest positioniert sind. Diese Eigenschaft dient in der realen Umsetzung wiederum der Erzielung einer besonders dünnen Bandage. Damit wird innerhalb und zwischen den Einzelteilen eine Bewegung weitgehend verhindert, womit Ermüdungseffekte in den Rotormaterialien und insbesondere bei eventuell vorhandenen Klebeverbindungen ausgeschlossen oder extrem reduziert sind.

Keramische Fasermaterialien sind problemlos im Handel erhältlich und werden herkömmlicherweise für Thermoisolationen verwendet.

Die Bandage ist auf dem Rotor mit Vorspannung angeordnet. Die Vorspannung stellt die strukturelle Integrität des Rotors bzw. des Stators sicher und insbesondere auch für den Fall, dass sich die Bandage relativ zu dem Rotor in einem gewissen Temperaturbereich erwärmt. Das Aufbringen der Bandage unter Vorspannung kann durch Bewickeln des Rotors unter Vorspannung des Fasermaterials erfolgen. Alternativ können separat vorgefertigte Bandagen durch "Aufschrumpfen" auf dem Rotor montiert werden. Die vorliegende Erfindung erlaubt damit eine einfachere Herstellung als bei Bandagen aus Kohlefasermaterial durch Aufschrumpfen. Zwar ist das Aufschrumpfen prinzipiell auch bei einem Bandagenmaterial ohne oder mit nur geringer Wärmeausdehnung möglich, indem der innere Teil abgekühlt wird und damit seine Größe bzw. sein Durchmesser verkleinert wird. Die Möglichkeit, die Bandage in ihrem Durchmesser durch Erwärmen zu vergrößern, macht es möglich, entweder die Durchmesserdifferenz zwischen innerem Teil und Bandage besonders groß zu machen oder ggf. auf die Abkühlung des inneren Teils zu verzichten.

Die Bandage weist das Fasermaterial in einer Kunststoffmatrix auf. Die Kunststoffmatrix kann beispielsweise aus einem Kunstharzmaterial oder einem anderen Kunststoffmaterial gebildet sein. Das Kunststoffmaterial kann vor, während oder nach dem Wickeln der Bandage mit dem Fasermaterial zusammengebracht werden. Vorzugsweise wird das Kunststoffmaterial bereits vor der Verarbeitung in das Fasermaterial eingebracht. Damit wird eine sehr gleichmäßig Verteilung des Kunststoffmaterials in dem Fasermaterial erreicht. Zum Teil wird im Handel bereits Fasermaterial in einer Kunststoffmatrix angeboten. Dieses Material wird als "Prepreg" bezeichnet.

Vorzugsweise ist die Bandage als kraftschlüssige Verbindung vom Rotor zum Rotorflansch ausgebildet. Aus einfachen statischen Überlegungen heraus ergibt sich, dass die Kraftübertragung vom Rotor auf den Rotorflansch am effizientesten im Bereich des Außenumfangs des Rotors, d.h. in dem Bereich, in dem die Bandage vorgesehen ist, erfolgt. Die Bandage, die als strukturelles Teil vorgesehen ist, kann ganz besonders bevorzugt gleichzeitig die kraftschlüssige Verbindung vom Rotor zum Rotorflansch darstellen. Es ist weiterhin bevorzugt, den Rotorflansch integral mit der Bandage auszubilden. So kann der Rotorflansch beispielsweise aus Fasermaterial in einer Kunststoffmatrix integral mit der Bandage hergestellt sein. Der Rotorflansch kann auch beispielsweise aus einer Kombination Fasermaterial/Kunststoffmatrix und einem anderen Material, beispielsweise Metall, hergestellt sein.

Die Materialien der Bandage und des Rotors sind so gewählt, dass Rotor einerseits und Bandage andererseits im Wesentlichen den identischen Wärmeausdehnungskoeffizienten aufweisen. Mit im Wesentlichen den identischen Wärmeausdehnungskoeffizienten sind die Fälle gemeint, in denen der Wärmeausdehnungskoeffizient der Bandage von dem mittleren Wärmeausdehnungskoeffizienten des Stators bzw. Rotors lediglich um 50%, vorzugsweise lediglich um 20%, vorzugsweise lediglich um 10% und besonders bevorzugt lediglich um 5% abweicht. Idealerweise ist exakte Identität der Wärmeausdehnungskoeffizienten gegeben. Je geringer der Unterschied in dem Wärmeausdehnungskoeffizienten ist, desto dünner kann die Bandage ausgelegt werden. Gleiche thermische Ausdehnungskoeffizienten können beispielsweise durch Materialwahl oder konstruktive Vorgaben innerhalb der Bandage erreicht werden. So stehen grundsätzlich verschiedene Keramikfasermaterialien mit unterschiedlichem Wärmeausdehnungskoeffizienten zur Verfügung, die "sortenrein" oder in einer geeigneten Mischung zur Erzielung des resultierenden Wärmeausdehnungskoeffizienten verwendet werden können. Alternativ lassen sich Keramikfasern mit anderen Fasermaterialien, beispielsweise Glasfaser oder Kohlefaser kombinieren, um gewünschte Eigenschaften zu erreichen. Der thermische Ausdehnungskoeffizient der Bandage lässt sich in einem gewissen Maße auch durch die Verwendung unterschiedlicher Materialien für die Kunststoffmatrix beeinflussen. Eine weitere Möglichkeit neben der Materialwahl liegt in der Anordnung der Faserrichtung, so kann beispielsweise die Wicklungsrichtung der Fasern relativ zur Umfangsrichtung des Rotors bzw. Stators den thermischen Ausdehnungskoeffizienten in Umfangsrichtung der Bandage beeinflussen. Eine möglichst genaue Anpassung der thermischen Ausdehnungskoeffizienten ist insbesondere bei Innenrotormaschinen besonders wichtig. Eine Anpassung der thermischen Ausdehnungskoeffizienten kann auch durch eine geeignete Wahl der Materialien in dem Rotor erfolgen.

Vorzugsweise ist die Bandage fluiddicht ausgebildet. Vorzugsweise ist das Matrixmaterial so gewählt, dass die Bandage fluiddicht ist. Vorzugsweise ist die Bandage mit einer fluiddichten Folie, beispielsweise eine Kaptonfolie, zur Fluidabdichtung versehen. Bei dem Fluid kann es sich einerseits um Gase oder andererseits um Flüssigkeiten, wie beispielsweise Wasser oder Öl, handeln. Das ist besonders bei fluidgekühlten Maschinen vorteilhaft. Die Bandage kann dann gleichzeitig die äußere Begrenzung für einen Fluidströmungskanal bzw. eine Fluidkammer bilden. Die Kaptonfolie kann beispielsweise zusammen mit dem Fasermaterial und dem Kunststoffmatrixmaterial bei der Herstellung der Bandage in die Bandage eingebracht werden oder alternativ vor oder nach der Herstellung der Bandage als Innen- oder Außenlage am Innenumfang oder am Au-βenumfang der Bandage vorgesehen sein.

Vorzugsweise weist die Bandage ein in Umfangsrichtung angeordnetes unidirektionales Fasermaterial auf. Unter unidirektionalem Fasermaterial versteht man Fasermaterial, bei dem die einzelnen Fasern im Wesentlichen parallel zueinander angeordnet sind. Die Bandage kann dann in Umfangsrichtung besonders hohe Kräfte aufnehmen. Außerdem bestimmt der thermische Ausdehnungskoeffizient der Fasern dann im Wesentlichen den Ausdehnungskoeffizienten in der Bandage in Umfangsrichtung, während das Kunststoffmatrixmaterial im Wesentlichen den thermischen Ausdehnungskoeffizienten in Axialrichtung bestimmt.

Vorzugsweise weist die Bandage unidirektionales Fasermaterial auf, das mit einem Winkel zu der Umfangsrichtung angeordnet ist. Das ist besonders dann bevorzugt, wenn durch die Orientierung des Fasermaterials der thermische Ausdehnungskoeffizient in Umfangsrichtung modelliert werden soll und/oder wenn die Bandage zum Anschluss an den Rotorflansch oder integral mit dem Rotorflansch ausgebildet ist. Geeignete Größen der Winkel liegen bei 45° ± 15°. Es kann auch anderes Fasermaterial als unidirektionales Fasermaterial verwendet werden. So gibt es Matten aus Fasermaterial, bei denen einzelne Fasermaterialien miteinander "verwebt" sind oder vorgefertigte Fasermaterialien, bei denen Fasern mit unterschiedlichen Winkeln zueinander angeordnet sind.

Vorzugsweise kann die Bandage mehrere Lagen von Fasermaterial aufweisen. So können dann unidirektionale Faserlagen mit nicht-unidirektionalen Faserlagen gemischt sein, es können unidirektionale Faserlagen, die in Umfangsrichtung angeordnet sind, mit unidirektionalen Faserlagen, die mit Winkel zur Umfangsrichtung angeordnet sind, etc. miteinander kombiniert werden, um gewünschte Eigenschaften bezüglich des Wärmeausdehnungskoeffizienten bzw. bezüglich struktureller Eigenschaften zu erzielen.

Vorzugsweise ist der Rotor ein Innenrotor. Für diesen Anwendungsfall eignet sich die vorliegende Erfindung besonders wegen des bereits angesprochenen Aspektes der Bandagendicke im Luftspalt zwischen Stator und Rotor.

Vorzugsweise ist der Rotor ein Außenrotor. Für diesen Anwendungsfall eignet sich die vorliegende Erfindung besonders, weil hohe Radialkräfte von einer möglichst dünnen Bandage gehalten werden müssen. Der Rotor trägt Dauermagnete. Die Verwendung der Bandage in Verbindung mit Dauermagneten erleichtert und verbilligt substanziell die Befestigung der Dauermagnete an dem Rotor.

Vorzugsweise ist der Stator ein Innenstator. Hier spielt wieder die Anordnung der Bandage in dem Luftspalt zwischen Stator und Rotor insbesondere mit Blick auf die Wärmeausdehnung des Stators bei Betrieb eine wesentliche Rolle.

Die Erfindung und Weiterbildungen der Erfindung werden nachfolgend an Hand eines zeichnerisch dargestellten Ausführungsbeispiels noch näher erläutert. Es zeigen:
Fig. 1 eine Teilansicht einer elektrischen Innenläufer-Maschine mit radial magnetisierten Dauermagneten gemäß der vorliegenden Erfindung;
Fig. 2 eine Teilansicht einer elektrischen Außenläufer-Maschine mit flusskonzentrierter Anordnung der Dauermagnete;
Fig. 3 die Verbindung zwischen Rotor und Rotorflansch mit einer erfindungsgemäßen Bandage; und
Fig. 4 eine Teilansicht einer elektrischen Innenstator-Maschine, die nicht unter den Anspruch 1 fällt.

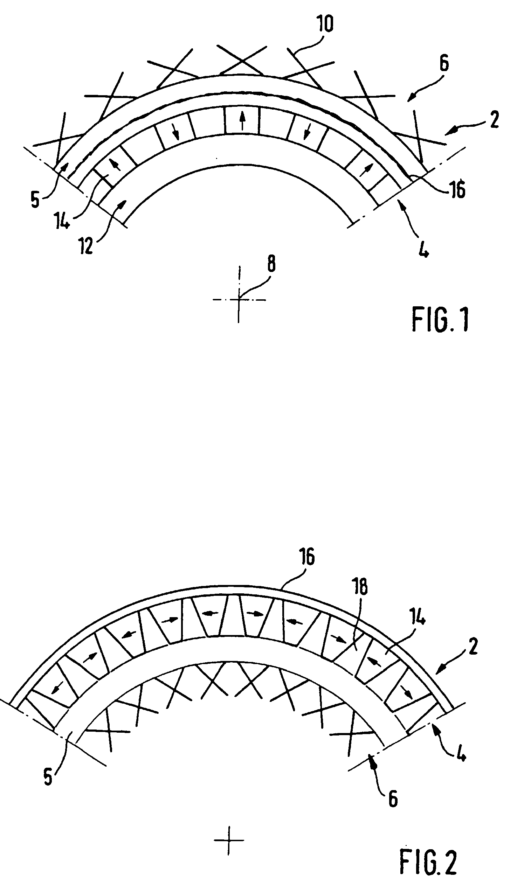

In Fig. 1 erkennt man die Teilansicht einer elektrischen Maschine 2, aufweisend einen Rotor 4 und einen Stator 6. Rotor 4 und Stator 6 sind um eine gemeinsamer Achse 8 koaxial angeordnet. Zwischen Rotor 4 und Stator 6 ist ein Luftspalt 5 vorgesehen. Der Stator 6 trägt elektrische Wicklungsspulen, die durch die Kreuze 10 schematisch dargestellt sind. Die Wicklungsspulen sind um (in der Fig. 1 nicht gezeigte) Wicklungskerne angeordnet.

Der Rotor 4 besteht aus mehreren Einzelteilen. Zu diesen gehören aktive Teile wie der magnetische Rückschluss 12 und Dauermagnete 14. Der in der Fig. 1 hohlzylinderförmig ausgebildete magnetische Rückschluss 12 kann gleichzeitig als Strukturteil, d.h. als tragendes Teil für die Magnete 14 dienen. Alternativ oder zusätzlich können weitere Strukturteile vorgesehen sein. Die in Fig. 1 radial magnetisierten Dauermagnete (die Magnetisierungsrichtung ist durch die Pfeile bei den Dauermagneten 14 gezeigt) sind bei Betrieb der elektrischen Maschine 2 hohen Zentrifugalkräften ausgesetzt und müssen entsprechend fest und zuverlässig an den magnetischen Rückschluss 12 oder an anderen Strukturteilen befestigt sein. Eine in dem Luftspalt vorgesehene Bandage 16, die in der Darstellung der Fig. 1 überproportional dick dargestellt ist, hält die Teile 12 und 14 des Rotors 4 zusammen.

Die Bandage 16 besteht aus einem keramischen Fasermaterial in einer Kunstharzmatrix.

Die Bandage 16 ist unter Vorspannung um den Außenumfang des Rotors 4 herum aufgebracht und hält so die Einzelteile des Rotors 4 sicher zusammen. Zusätzlich können die Einzelteile des Rotors 4 mittels anderer Verbindungen, beispielsweise mechanischer formschlüssiger Verbindungen, Klebeverbindungen etc., miteinander verbunden sein. Bei einer derartigen Kombination lässt sich die Bandage 16 noch dünner ausbilden.

Keramikfasern haben ein günstiges Elastizitätsmodul, das eine nur minimale Dehnung bei Krafteinwirkung zur Folge hat. Das stellt einerseits die Maßhaltigkeit des Rotoraußendurchmessers bei Betrieb der elektrischen Maschine 2 sicher und hat einen besonderen Vorteil, wenn die Einzelteile des Rotors 4 neben der Bandage durch Klebung miteinander verbunden sind. Weil die Vorspannung der Bandage so gewählt ist dass die Bandage unter Fliehkrafteinwirkung sich nur minimal weitet bzw. keine oder nur minimale Dehnung auftritt, ist innerhalb und zwischen den Rotorteilen eine Bewegung weitgehend verhindert, und Ermüdungseffekte in den Rotormaterialien und insbesondere bei Klebeverbindungen sind wesentlich reduziert, was der Lebensdauer der elektrischen Maschine 2 in höchstem Maße zuträglich ist.

Die Bandage 16 kann durch Wickeln beispielsweise direkt auf dem Rotor 4 unter Vorspannung der verwendeten Fasermaterialien hergestellt werden. Alternativ ist es möglich, die Bandage auf einem Wickeldorn separat herzustellen, wobei der Wickeldorn vorzugsweise einen etwas geringeren Durchmesser aufweist als der Außendurchmesser des Rotors 4. Fasermaterial und Matrixmaterial werden entweder schon vor dem Wickeln zusammengebracht oder sie werden während des Wickelns des Fasermaterials oder nach dem Wickeln des Fasermaterials zusammengebracht. Das Zusammenbringen von Fasermaterial und Matrixmaterial vor bzw. während des Wickelns ist mit Blick auf eine möglichst gute Durchdringung des Matrixmaterials und des Fasermaterials bevorzugt.

Nach dem Wickeln der Bandage 16 wird die Bandage 16 bzw. das Matrixmaterial gehärtet. Um Strukturbeeinträchtigungen durch Lufteinschlüsse zu vermeiden, kann es günstig sein, die gewickelte Bandage vor dem Härten einem Unterdruck auszusetzen, um Lufteinschlüsse aus den Materialien "zu ziehen". Dieser Unterdruck kann für eine gewisse Zeit aufrecht erhalten werden. Je nach Matrixmaterial kann es günstig sein, das Luftaustreiben unter Unterdruck bei einer erhöhten Temperatur vorzunehmen, um die Viskosität des Matrixmaterials zu erhöhen. Es kann generell auch günstig sein, die Außenseite der Bandage zu formen. Dazu können beispielsweise Formhälften vorgesehen sein, die vorzugsweise achsensymmetrisch zu dem Wickelkern bzw. dem Rotor angeordnet sind und formgebende Oberflächen für die Außenseite der Bandage 16 aufweisen. Das Aushärten kann beispielsweise in einem Autoklaven erfolgen.

Für manche Anwendungen kann es günstig sein, wenn die Bandage 16 fluiddicht, d.h. gas- und/oder flüssigkeitsdicht ist. Das kann einerseits durch eine geeignete Materialauswahl für das Matrixmaterial erreicht werden. Alternativ und/oder zusätzlich kann eine fluiddichte Folie bei der Bandage vorgesehen sein. Die Folie kann mit den einzelnen Faserlagen parallel gewickelt werden, d.h. so dass sie bezüglich der Rotationsachse zwischen den einzelnen Faserlagen spiralförmig aufgewickelt ist und von dem Matrixmaterial mit gehalten wird.

Die Bandage 16 kann durch Aufschrumpfen mit dem Rotor 4 vereinigt werden. Dazu kann entweder die Bandage 16 so weit erwärmt werden, dass sie einen Innendurchmesser aufweist, der etwas größer ist als der Außendurchmesser des Rotors 4, es kann die Bandage 16 erwärmt werden und der Rotor 4 abgekühlt werden, oder es kann lediglich der Rotor 4 abgekühlt werden.

Es ist besonders bevorzugt, Rotor 4 und Stator 6 mit ähnlichem oder gleichem Wärmeausdehnungskoeffizienten vorzusehen, so dass bei thermischer Belastung der elektrischen Maschine der Luftspalt 5 zwischen Rotor 4 und Stator 6 im Wesentlichen konstante Dicke beibehält.

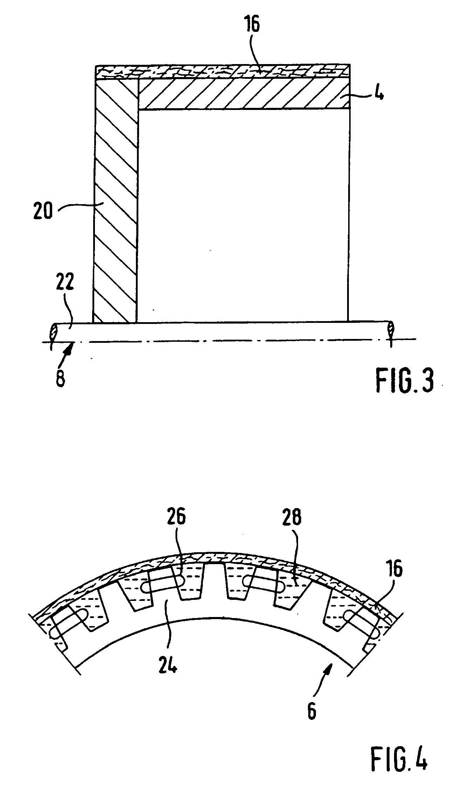

Nachfolgend werden an Hand der Figuren 2 bis 4 weitere Ausführungsbeispiele geschildert, wobei in den Figuren die gleichen Bezugszeichen für einander entsprechende Teile verwendet werden. Es sei insbesondere ausdrücklich angemerkt, dass generelle Ausführungen, insbesondere solche bezüglich der Bandage 16, wie sie im Zusammenhang mit der Fig. 1 gemacht wurden, in entsprechender Weise für die Figuren 2 bis 4 gelten. Das gilt insbesondere auch für die Fig. 4, bei der ein innen liegender Stator von einer entsprechenden Bandage 16 umgeben ist, so dass ein Teil der in Fig. 1 über die Bandage 16 mit Hinweis auf den Rotor 4 gemachten Aussagen bei der Fig. 4 auf den Stator 6 zu lesen sind.

Fig. 2 zeigt eine elektromagnetische Außenläufer-Maschine 2 mit einem außen liegenden Läufer oder Rotor 4 und einem innen liegenden Stator 6. Zwischen Rotor 4 und Stator 6 ist ein Luftspalt 5 vorgesehen. Bei der in Fig. 2 gezeigten Ausführungsform weist der Außenrotor 4 eine Mehrzahl von Dauermagneten 14 auf, die in Kombination mit Flussleitstücken 18 in flusskonzentrierter Anordnung vorgesehen sind. Alternativ könnte in der Fig. 2 auch eine Anordnung der Dauermagnete 14 gemäß Fig. 1 vorgesehen sein oder umgekehrt. Ferner erkennt man in Fig. 2 die außen liegende Bandage 16. Die außen liegende Bandage 16 beeinflusst den Außendurchmesser der elektrischen Maschine 2 von Fig. 2, d.h. je dünner die Bandage 16 ist, desto geringer ist der Außenumfang der elektrischen Maschine 2. Dies bedeutet aber auch den Vorteil, dass bei gleichem Außendurchmesser der Luftspalt radial weiter außen liegen kann und damit die Maschine besser ausgenützt wird. Im Vergleich dazu kann, je dünner die Bandage 16 der Fig. 1 ausgebildet ist, der Luftspalt 5 kleiner ausgebildet sein.

In Fig. 3 sind lediglich der Rotor 4, der Rotorflansch 20 und die Maschinenwelle 22 gezeigt, wobei Rotor 4 und Rotorflansch 20 mittels der Bandage 16 verbunden sind. Bei dem Rotor 4 der Fig. 3 kann es sich sowohl um einen Rotor für eine Innenläufer-Maschine wie auch für eine Außenläufer-Maschine handeln. Während bei der Darstellung der Fig. 3 die Kraftübertragung in konventioneller Weise über die Maschinenwelle 22 erfolgt, kann auch im Bereich des Außenumfangs des Rotors 4 bzw. des Rotorflanschs 20 die Kraftübertragung von der elektrischen Maschine weg bzw. auf diese erfolgen. Insbesondere bei einer solchen Ausbildung kann es günstig sein, den Rotorflansch 20 integral mit der Bandage 16 auszubilden.

Fig. 4 zeigt einen Innenstator 6 mit Bandage 16, der nicht unter den Anspruch 1 fällt. Man erkennt insbesondere Statorzähne 24, die mit schematisch dargestellten Statorwicklungen 26 ausgebildet sind. Zwischen den Statorzähnen 24 sind Fluidkanäle 28 zur Innenkühlung des Stators vorgesehen. Die Bandage 16 der Fig. 4 muss typischerweise keine Zentrifugalkräfte aufnehmen und durch die Anpassung des thermischen Ausdehnungskoeffizienten der Bandage 16 an den des Stators 6 treten auch praktisch keine thermisch bedingten Zugspannungen in der Bandage 16 auf. Die Bandage 16 lässt sich deshalb verglichen mit entsprechenden Bandagen aus dem Stand der Technik ganz besonders dünn ausbilden, wodurch der Luftspalt zwischen Innenstator und Rotor extrem dünn gehalten werden kann.

Es ist ganz besonders bevorzugt, den Innenstator von Fig. 4 mit einem Außenrotor mit erfindungsgemäßer Bandage zu kombinieren. Im Wesentlichen gleiche Temperaturverhältnisse bei Rotor und Stator vorausgesetzt, kann man von einer temperaturunabhängigen Luftspaltdicke ausgehen. Das typischerweise konstruktionsseitig für thermische Ausdehnung vorgesehene Spiel im Luftspalt 5 ist bei einer derartigen Maschine nicht erforderlich, so dass der Luftspalt 5 noch dünner ausgelegt werden kann. Gleiches gilt umgekehrt für eine Bandage 16 aus Keramikmaterial auch für eine Innenläufermaschine mit Außenstator, der von einer entsprechenden Bandage 16 umfangsmäßig umgeben ist bzw. der einen angepassten mittleren Wärmeausdehnungskoeffizienten aufweist.

Es wird ausdrücklich darauf hingewiesen, dass der in der vorliegenden Anmeldung verwendete Begriff "elektrische Maschine" sowohl Elektromotoren (Umwandlung elektrischer Energie in mechanische Energie) als auch Stromgeneratoren (Umwandlung mechanischer Energie in elektrische Energie) umfasst. Außerdem wird ausdrücklich darauf hingewiesen, dass der Begriff "Stator" nicht bedeuten soll, dass der Stator zwangsläufig unbewegt sein soll, und dass der Begriff "Rotor" nicht bedeuten soll, dass der Rotor zwangsläufig ein rotierbarer Bestandteil der Elektromaschine sein soll. Man kann vielmehr ohne Weiteres den Stator (also den mit Spulenwicklungen ausgestatteten Bestandteil der Elektromaschine) als rotierenden Maschinenteil vorsehen und den Rotor als stationären, unbewegten Maschinenteil vorsehen. Die Auslegung mit den Spulenwicklungen an dem unbewegten Teil der Maschine ist allerdings normalerweise günstiger, weil sich die Spulenwicklungen, denen Strom zugeführt wird bzw. von denen im Fall des Generators Strom entnommen wird, an einem stationären Maschinenteil befinden, was Schleifkontakte vermeidet. Außerdem sei der mögliche Ausführungsfall erwähnt, dass sowohl der Stator als auch der Rotor sich mit unterschiedlicher Drehzahl und/oder unterschiedlicher Drehrichtung drehen, insbesondere wenn sie über ein Getriebe miteinander verbunden sind oder Bestandteile eines Getriebes, z.B. eines Planetengetriebes, sind. Die erfindungsgemäße elektrische Maschine ist vorzugsweise mit elektronischer Ein- und Ausschaltung der Spulenwicklungsströme ausgebildet. Mittels eines geeigneten Sensors oder auf Grund von elektrischen Informationen aus der Speisung des Elektromotors wird die Rotations-Relativstellung zwischen dem Statorteil und dem Rotorteil ermittelt; der Strom durch die Spulenwicklungen wird jeweils zur richtigen Zeit eingeschaltet und wieder ausgeschaltet. Geeignete elektrische Schaltungen und geeignete elektronische Bauelemente zur Verwirklichung der beschriebenen Stromsteuerung bei Elektromotoren bzw. Stromentnahme bei Generatoren sind bekannt und müssen hier nicht näher beschrieben werden.

## Patentansprüche

1. Elektrische Maschine (2) aufweisend einen Rotor (4) und einen dazu koaxial angeordneten Stator (6), wobei der Rotor (4) Dauermagnete (14) und einen magnetischen Rückschluß (12) aufweist, und eine Bandage (16) vorgesehen ist, die die Dauermagnete (14) und den magnetischen Rückschluß (12) bei Betrieb gegen die Zentrifugalkräfte zusammenhält,
wobei die Bandage (16) ein in einer Kunststoffmatrix angeordnetes Keramikfasermaterial aufweist, das elektrisch nicht leitend ist,
**dadurch gekennzeichnet,**
**dass** die Bandage (16) mit einer Vorspannung um den Rotor (4) herum angeordnet ist und dass die Vorspannung derart ist, dass sich die Bandage (16) bei Betrieb unter Zentrifugalkrafteinwirkung nicht oder nur minimal dehnt, so dass die Bandage die strukturelle Integrität des Rotors beibehält;
**dass** die Wärmeausdehnungskoeffizienten in Umfangsrichtung des Rotors (4) und der Bandage (16) um maximal 50% voneinander abweichen;
**dass** die Bandage (16) ein unidirektionales Keramikfasermaterial aufweist, das einen Wärmeausdehnungskoeffizienten hat, der maximal um den Faktor 2 größer oder kleiner ist als der des Rotors (4); und
**dass** das Keramikfasermaterial einen Elastizitätsmodul über 300 GPa aufweist.

2. Elektrische Maschine (2) nach Anspruch 1, **dadurch gekennzeichnet, dass** die Bandage (16) als kraftschlüssige Verbindung vom Rotor (4) zum Rotorflansch (20) ausgebildet ist.

3. Elektrische Maschine (2) nach Anspruch 1 oder 2, **dadurch gekennzeichnet, dass** das Matrixmaterial derart vorgesehen ist, dass die Bandage (16) fluiddicht ist.

4. Elektrische Maschine (2) nach einem der Ansprüch 1 bis 3, **dadurch gekennzeichnet, dass** die Bandage (16) mit einer fluiddichten Folie vorgesehen ist.

5. Elektrische Maschine (2) nach Anspruch 4, **dadurch gekennzeichnet, dass** die Folie eine Kaptonfolie ist.

6. Elektrische Maschine (2) nach einem der Ansprüche 1 bis 5, **dadurch gekennzeichnet, dass** die Bandage (16) in Umfangsrichtung angeordnetes unidirektionales Fasermaterial aufweist.

7. Elektrische Maschine (2) nach einem der Ansprüche 1 bis 6, **dadurch gekennzeichnet, dass** die Bandage (16) mit einem Winkel zu der Umfangsrichtung angeordnetes unidirektionales Fasermaterial aufweist.

8. Elektrische Maschine (2) nach einem der Ansprüche 1 bis 7, **dadurch gekennzeichnet, dass** die Bandage (16) mehrere Lagen von Fasermaterial aufweist.

9. Elektrische Maschine (2) nach einem der Ansprüche 1 bis 8, **dadurch gekennzeichnet, dass** der Rotor (4) ein Innenrotor ist.

10. Elektrische Maschine (2) nach einem der Ansprüche 1 bis 8, **dadurch gekennzeichnet, dass** der Rotor (4) ein Außenrotor ist.

11. Elektrische Maschine (2) nach einem der Ansprüche 1 bis 9, **dadurch gekennzeichnet, dass** der Stator (6) ein Innenstator ist.

## Claims

1. Electric machine (2) comprising a rotor (4) and a stator (6) arranged coaxially therewith, the rotor (4) comprising permanent magnets (14) and a magnetic yoke (12), and a bandage (16) holding together the permanent magnets (14) and the magnetic yoke (12) in use against centrifugal forces, the bandage (16) comprising a ceramic fiber material which is electrically nonconductive and located in a plastic matrix,
**characterized in that**
the bandage (16) is arranged around the rotor (4) with a bias and that the bias is such that in use the bandage (16), under the effect of centrifugal forces, does not expand or expands in minimum manner only, so that the bandage maintains the structural integrity of the rotor;
that the coefficients of thermal expansion of the rotor (4) and bandage (16) in a circumferential direction differ from each other at most by 50 %;
that the bandage (16) comprises a unidirectional ceramic fiber material having a coefficient of thermal expansion which is at most by factor of 2 larger or smaller than that of the rotor (4);
and that the ceramic fiber material has a modulus of elasticity of higher than 300 GPa.

2. Electric machine (2) of claim 1, **characterized in that** the bandage (16) is formed as a frictional connection from the rotor (4) to the rotor flange (20).

3. Electric machine (2) of claim 1 or 2, **characterized in that** the matrix material is provided such that the bandage (16) is fluid-tight.

4. Electric machine (2) of any one of claims 1 to 3, **characterized in that** the bandage (16) is provided with a fluid-tight film.

5. Electric machine (2) of claim 4, wherein the film is a Kapton (registered trade mark) film.

6. Electric machine (2) of any of claims 1 to 5, **characterized in that** the bandage (16) comprises unidirectional fiber material arranged in circumferential direction.

7. Electric machine (2) of claims 1 to 6, **characterized in that** the bandage (16) comprises unidirectional fiber material arranged at an angle with respect to the circumferential direction.

8. Electric machine (2) of claims 1 to 7, **characterized in that** the bandage (16) comprises several layers of the fiber material.

9. Electric machine (2) of claims 1 to 8, **characterized in that** the rotor (4) is an internal rotor.

10. Electric machine 2 of claims 1 to 8, **characterized in that** the rotor (4) is an external rotor.

11. Electric machine (2) of claims 1 to 9, **characterized in that** the stator (6) is an internal stator.

## Revendications

1. Machine électrique (2) comportant un rotor (4) et un stator (6), agencé coaxialement à ce dernier, le rotor (4) comportant des aimants permanents (14) et une culasse (12) magnétique, et dans laquelle il est prévu un bandage (16) qui, en cours de service, maintient les aimants permanents (14) et la culasse (12) magnétique contre les forces centrifuges,
le bandage (16) comportant un matériau à fibres céramique non électroconducteur, agencé dans une matrice de matière plastique,
**caractérisée en ce que**
le bandage (16) est agencé avec une précontrainte autour du rotor (4) et **en ce que** la précontrainte est telle que, en cours de service, le bandage (16) ne s'étire pas ou s'étire seulement un minimum sous l'effet des forces centrifuges, de telle sorte que le bandage maintient l'intégrité structurelle du rotor ;
**en ce que** les coefficients de dilatation thermique dans le sens périphérique du rotor (4) et du bandage (16) s'écartent au maximum de 50 % l'un de l'autre ;
**en ce que** le bandage (16) comporte un matériau à fibres céramiques unidirectionnelles, dont le coefficient de dilatation thermique est au maximum deux fois supérieur ou inférieur à celui du rotor (4) ; et
**en ce que** le matériau à fibres céramiques a un module d'élasticité supérieur à 300 GPa.

2. Machine électrique (2) selon la revendication 1, **caractérisée en ce que** le bandage (16) est réalisé sous forme d'assemblage par force depuis le rotor (4) vers le collet de rotor (20).

3. Machine électrique (2) selon la revendication 1 ou 2, **caractérisée en ce que** le matériau de la matrice est prévu de telle sorte que le bandage (16) soit étanche aux fluides.

4. Machine électrique (2) selon l'une quelconque des revendications 1 à 3, **caractérisée en ce que** le bandage (16) est prévu avec une feuille étanche aux fluides.

5. Machine électrique (2) selon la revendication 4, **caractérisée en ce que** la feuille est une feuille de Kapton.

6. Machine électrique (2) selon l'une quelconque des revendications 1 à 5, **caractérisée en ce que** le bandage (16) comporte un matériau à fibres unidirectionnelles agencé dans le sens périphérique.

7. Machine électrique (2) selon l'une quelconque des revendications 1 à 6, **caractérisée en ce que** le bandage (16) comporte un matériau à fibres unidirectionnelles agencé en formant un angle par rapport à la direction périphérique.

8. Machine électrique (2) selon l'une quelconque des revendications 1 à 7, **caractérisée en ce que** le bandage (16) comporte plusieurs couches de matériau à fibres.

9. Machine électrique (2) selon l'une quelconque des revendications 1 à 8, **caractérisée en ce que** le rotor (4) est un rotor intérieur.

10. Machine électrique (2) selon l'une quelconque des revendications 1 à 8, **caractérisée en ce que** le rotor (4) est un rotor extérieur.

11. Machine électrique (2) selon l'une quelconque des revendications 1 à 9, **caractérisée en ce que** le stator (6) est un stator intérieur.
